# DEMANDE DE BREVET EUROPEEN

(11) **EP 0 917 322 A1**
(43) Date de publication de la demande: **19.05.1999**
(21) Numéro de dépôt: 98402708.6
(22) Date de dépôt: 30.10.1998
(51) Int. Cl.: H04L 12/58, H04M 3/50

(54) **Procédé de relève d'une boîte à lettres électronique d'un réseau de transmission de données, tel l'Internet**

(30) Priorité: 12.11.1997 FR 9714146
(71) Demandeur: SAGEM SA, 75116 Paris (FR)
(72) Inventeur: Cazin, Dominique, 92150 Suresnes (FR); Duong, Dan, 75005 Paris (FR)
(74) Mandataire: Bloch, Gérard

(57) **Abrégé**

Dans le procédé de relève des courriers électroniques d'une boîte à lettres (3), reliée à un réseau de transmission de données (1), par appels téléphoniques de la boîte (3) à travers un réseau téléphonique (7),
- on établit un menu d'options d'appels,
- on accède au menu et
- on applique au menu un algorithme de sélection pour sélectionner une option d'appels, en adaptant l'option sélectionnée au remplissage de la boîte à lettres (3) par lancements cycliques des appels de relève de la boîte à lettres (3) pour établir un spectre (23) du nombre de messages arrivés entre relevés successifs, et on retient une séquence d'appels de relève correspondant aux pics du spectre.

## Description

La présente invention concerne les transmissions de messages de courrier électronique à travers un réseau de transmission de données, comme l'INTERNET, et en particulier le relevé, par un équipement récepteur, des messages qui lui ont été adressés et qui sont temporairement mémorisés dans une boîte à lettres mise à sa disposition.

L'INTERNET, pour reprendre cet exemple, permet à tout abonné, disposant d'un PC, d'échanger des messages de courrier électronique avec un autre abonné.

En pratique, pour limiter les coûts d'abonnement, les utilisateurs s'abonnent auprès d'un fournisseur d'accès INTERNET, qui autorise des connexions intermittentes avec celui-ci, dans la limite de l'abonnement choisi. Afin de pouvoir cependant à tout moment, recevoir des messages, l'abonné dispose d'une boîte à lettres, tampon, chez son fournisseur d'accès. Il lui faut alors surveiller cette boîte en appelant périodiquement son fournisseur d'accès, par le réseau téléphonique, pour relever la boîte afin, d'une part, de prendre connaissance des messages, et, d'autre part, de la vider.

Il se pose alors le problème d'établir un bon compromis entre, d'une part la limitation du délai moyen séparant l'arrivée, à un instant aléatoire, d'un message dans la boîte à lettres et le relevé de celle-ci, et, d'autre part, la limitation de la fréquence des appels, et donc des coûts de ceux-ci, pour relever la boîte à lettres.

La présente invention vise à adapter le compromis coût des appels/délai d'attente en boîte à lettres arrivée.

A cet effet, l'invention concerne un procédé de relève, des courriers électroniques d'une boîte à lettres, reliée à un réseau de transmission de données, par appels téléphoniques de la boîte à travers un réseau téléphonique, caractérisé par le fait que :
- on établit un menu d'options d'appels,
- on accède au menu et
- on applique au menu un algorithme de sélection pour sélectionner une option d'appels.

Ainsi, l'utilisateur d'un équipement appelé peut choisir, en fonction de ses besoins, la pondération relative entre le coût des appels et le délai d'attente en boîte à lettres avant la réception effective dans son équipement. Un particulier pourra ainsi choisir un seul relevé journalier alors qu'une entreprise choisira plutôt des relevés journaliers multiples, limitant le délai maximal à une ou quelques heures, par exemple.

Avantageusement, on adapte l'option sélectionnée au remplissage de la boîte à lettres.

L'invention sera mieux comprise à l'aide de la description suivante d'un mode préféré de mise en oeuvre du procédé de l'invention, en référence au dessin annexé, sur lequel :
- la figure 1 représente schématiquement deux équipements de transmission de données reliés au réseau INTERNET, pour la mise en oeuvre du procédé de l'invention, et
- la figure 2 est un organigramme illustrant un algorithme de choix de séquences de relèves de boîte à lettres INTERNET.

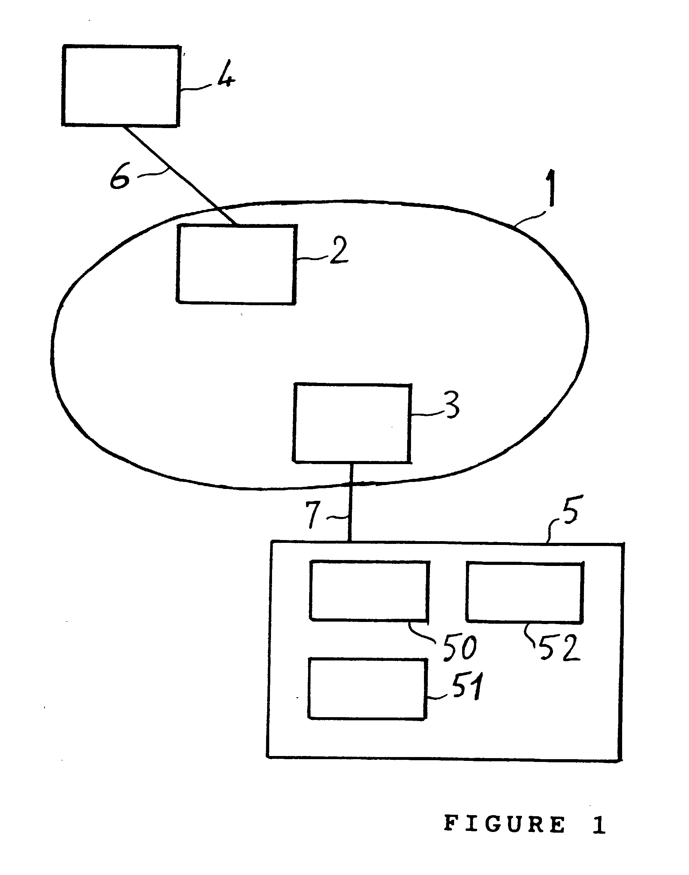

La figure 1 représente un réseau de transmission de données, ici l'INTERNET, référencé 1, auquel sont raccordés deux équipements de transmission de données 4, 5, ici des télécopieurs adaptés pour la transmission de messages de courrier électronique, ayant ainsi une fonction de PC. Les télécopies sont émises en étant adaptées au format de messagerie électronique prévu pour l'INTERNET 1. Les télécopieurs 4 et 5 sont reliés, par deux lignes respectives 6 et 7 du réseau téléphonique, à des boîtes à lettres respectives 2 et 3 de l'INTERNET 1, disposées chez un fournisseur d'accès INTERNET. Le télécopieur 5 comporte un écran 50, un pupitre 51 et une mémoire 52.

Pour envoyer une télécopie au télécopieur 5, un télécopieur comme celui référencé 4 l'envoie d'abord à une boîte à lettres comme 2, utilisée alors en départ, et elle est ensuite retransmise à la boîte à lettres 3, utilisée en arrivée, du télécopieur 5.

La boîte à lettres 2, départ, prévue ici, n'a en fait pas d'influence sur le procédé puisque c'est le télécopieur 4 qui a pris l'initiative de l'émission; elle sert de tampon très temporaire permettant simplement de tolérer un temps d'attente pour traverser l'INTERNET 1, en libérant la ligne 6.

Par contre, la boîte à lettres 3, utilisée en réception, représente un tampon nécessaire, puisque le télécopieur appelé 5 n'est pas en permanence en liaison avec la boîte à lettres 3.

Il s'agit donc de déterminer une stratégie pour relever les messages de la boîte arrivée 3, alors que les arrivées de messages ne sont pas signalées au télécopieur 5. A cet effet, on établit un menu d'options d'appels de la boîte 3, on accède au menu et on applique au menu un algorithme de sélection pour sélectionner une option d'appels.

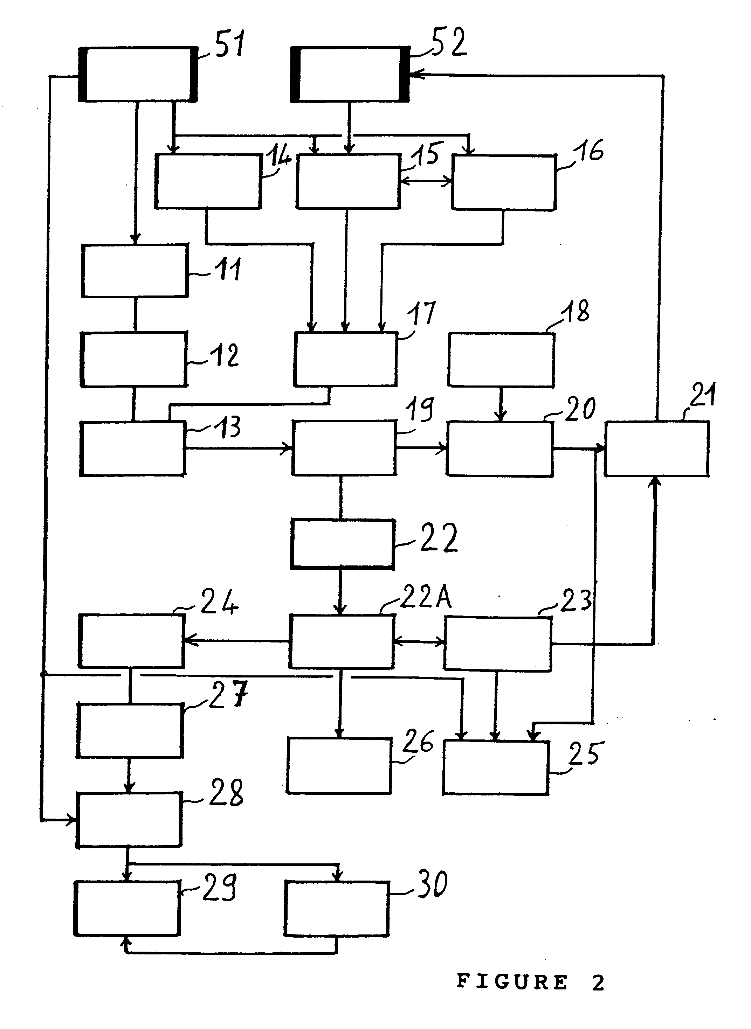

La figure 2 illustre cette stratégie dans le télécopieur 5.

Comme il est ici prévu que le télécopieur 5 fonctionne aussi en émission de télécopies, la boîte à lettres 3 étant alors utilisée en émission comme expliqué pour la boîte à lettres 2, les premières étapes, 11 à 20, concernent cette émission et les étapes suivantes concernent la réception des télécopies par relevé de la boîte à lettres 3. Comme on le constatera, la réception des courriers électroniques de télécopie est aussi concernée par les étapes 11 à 20, en ce sens que les appels d'émission sur la ligne 7 servent aussi, dans cet exemple, à relever la boîte 3. Ainsi, dans un même appel, on combine la relève de la boîte 3 et l'émission d'un message sur l'INTERNET 1.

A partir du pupitre 51 du télécopieur 5, un utilisateur mémorise, dans cet exemple, à une étape 11, un message, ici une télécopie, qu'il est prévu d'émettre vers un autre télécopieur relié à l'INTERNET 1. Le message a préalablement été mis au format du courrier électronique INTERNET, par exemple sous forme d'un message comportant en pièce jointe les signaux de codage de l'image de télécopie. A une étape 12, la télécopie-courrier électronique est ici éditée et mise en attente d'une étape 17 d'appel de la boîte 3 par le télécopieur 5 à travers la ligne 7, étape 17 dont l'instant d'exécution dépend de l'option choisie par le menu. A une étape 13 suivante, est prise la décision d'émission vers la boîte 3 et, à une étape 19 suivante, la ou les télécopies mémorisées dans le télécopieur 5 sont envoyées à la boîte 3, alors utilisée en boîte départ, pour être ensuite émises sur l'INTERNET 1 par le fournisseur d'accès, comme expliqué pour la boîte 2.

A une étape 20 est dressé un historique sous forme d'histogramme ou spectre des émissions de l'étape 19 et, à une étape 21, un algorithme d'optimisation du total des durées de connexion est alimenté par le spectre 20, les résultats obtenus étant alors mémorisés dans la mémoire 52. L'algorithme d'optimisation 21 est détaillé plus loin. Les résultats en mémoire 52 servent à déclencher l'étape 17 par une étape 15 de procédure automatique, préprogrammée et ainsi adaptative. L'étape 17 peut aussi être déclenchée manuellement à une étape 14 depuis le pupitre 51. De même, une procédure automatique d'appel périodique peut, à une étape 16, déclencher l'étape 17, en se coordonnant avec l'étape 15.

Le choix, entre les étapes 14, 15 et 16, de la gestion des instants auxquels sont lancés les appels sur la ligne 7 pour émettre les télécopies et relever la boîte 3 est présenté à l'utilisateur du télécopieur 5 sur l'écran 50, sur lequel est présenté un menu correspondant d'options d'appel. L'utilisateur accède au menu et, par le pupitre 51, sélectionne une option d'appel lue sur l'écran 50, un algorithme de sélection étant appliqué à cet effet. Plusieurs des options élémentaires affichées peuvent en fait être choisies, dans la mesure où elles sont compatibles entre elles pour former une option globale choisie. Cet algorithme de sélection prend par exemple en compte une option élémentaire de coût journalier maximal de connexion (7), une option élémentaire de délai maximal admissible de latence en boîte à lettres arrivée et une option élémentaire de niveau de priorité entre ces deux premières options. En cas de dépassements trop fréquents du délai maximal de latence, l'algorithme de sélection pourra décider a posteriori d'augmenter la fréquence des appels et donc de dépasser le coût fixé en option, si cette dernière option élémentaire a un niveau de priorité inférieur à celui de l'option élémentaire de délai. Il peut encore être proposé en option de fixer l'heure de certains relevés, afin de recevoir sans retard certaines télécopies prévues pour arriver chaque jour à heure fixe. Ces télécopies sont ainsi prioritaires, quel que soit le spectre du trafic global. On sélectionne ainsi une option globale d'appel d'après la ou les options élémentaires affichées, les résultats d'observation du trafic pouvant influer sur l'option globale sélectionnée.

L'algorithme appliqué au menu a donc un effet d'adaptation a posteriori, par rapport aux choix d'options élémentaires présentés à l'utilisateur par le menu, et aussi un effet d'adaptation a priori puisqu'il fait évoluer les diverses options du menu et qu'ainsi un nouveau choix d'une option globale s'effectuera à partir d'options élémentaires affichées ayant été adaptées par cet algorithme. Il peut en particulier être prévu que soient affichés en permanence l'horaire des relevés et les coûts, afin que l'utilisateur puisse effectuer un nouveau choix d'options si l'option globale, adaptée continûment par l'algorithme, dérive trop par rapport à ce qui était sélectionné et ne paraît plus satisfaisante en ce qui concerne l'une des options élémentaires, spécifiée ou non à l'origine par l'utilisateur.

Une étape 18 fournit des signaux pour horodater le spectre de l'étape 20, qui, par commande depuis le pupitre 51, est édité à une étape 25 sous forme de journal d'émissions.

L'étape 19 d'émission vers la boîte 3, qui va donc voir un vidage d'une mémoire de données de messages dans le télécopieur 5, est suivie des étapes de relevé de la boîte à lettres 3, qui vont ainsi disposer de la pleine capacité mémoire pour y mémoriser les télécopies relevées et les éditer.

A cet effet, une étape 22, déclenchée par l'étape 17 et suivant ici l'étape 19, de relevé de la boîte à lettres 3, utilisée alors en arrivée, consiste à transférer, dans la mémoire de messages du télécopieur 5, les messages arrivés de l'INTERNET 1 depuis le dernier relevé, en provenance de la boîte 2 du télécopieur 4, et éventuellement d'autres télécopieurs raccordés directement à l'INTERNET 1 ou à travers une boîte à lettres.

On vérifie, à une étape suivante 22A, l'absence de doublons, c'est-à-dire qu'on s'assure de ne pas relever plusieurs fois le même courrier de télécopie.

A une étape suivante 23, est dressé un histogramme, ou spectre, des relevés de la boîte 3, c'est-à-dire les dates et instants des relevés et le nombre de messages relevés à chaque fois. Ce spectre (23) alimente lui-aussi l'algorithme d'optimisation des connexions de l'étape 21, pour adapter l'option sélectionnée au remplissage de la boîte à lettres 3, c'est-à-dire influer sur l'algorithme de sélection. Par exemple, une même sélection d'options du menu, effectuée à nouveau, aboutirait à une séquence d'appels différente de la première, par le fait que l'algorithme d'optimisation 21 adapterait l'option sélectionnée en fonction des relevés de trafic. Cette adaptation s'effectue donc ici continûment, à mesure que sont lancés de nouveaux appels vers la boîte 3.

L'étape 22A est aussi suivie d'une étape 24, dans laquelle on convertit ceux des messages relevés qui sont des télécopies au format courrier électronique, en télécopies de format classique. Cette conversion est interdite si l'étape 22A a déterminé qu'il s'agissait d'un doublon. A une étape 27, la présence de la ou des télécopies reçues est signalée par le télécopieur 5, par un voyant ou un message sur l'écran 50, et les télécopies sont alors éditées, étape 28, par commande depuis le pupitre 51 ou automatiquement. La mémoire de données les contenant est alors effacée automatiquement ou sur confirmation de l'utilisateur du télécopieur 5, étape 29.

L'étape 28 est suivie ici d'une étape 30 pour émettre en retour une réponse vers le télécopieur 4 (et les éventuels autres télécopieurs émetteurs), par exemple tout ou partie de la télécopie qu'il a émise, avec des annotations ajoutées. Ce peut être cette réponse qui efface la mémoire de données ci-dessus.

L'étape 22A est suivie d'une étape 26 d'émission, donc lors du même appel, d'accusés de réception, sous forme de messages, pendant la durée de la connexion de relevé de la boîte à lettres 3 par la ligne 7.

L'algorithme de l'étape 21 qui, dans cet exemple, prend aussi en compte les émissions 20 du télécopieur 5, comporte une première phase de détermination du flux moyen de trafic échangé avec la boîte à lettres 3, c'est-à-dire de la durée et du nombre de liaisons établies par la ligne 7 et du nombre de télécopies échangées. Les échanges sont alors effectués avec un cycle accéléré, par exemple toutes les heures, pour avoir une bonne précision sur le spectre de trafic.

Dans une seconde phase, la valeur moyenne du trafic obtenue est modulée pour tenir compte des tranches horaires, ce qui fournit un histogramme ou spectre horaire, ou horodaté, c'est-à-dire par tranche de temps, heure ou autre, sur la journée ou sur des périodes plus longues.

Il est alors établi un horaire pour le relevé de la boîte 3, qui sert en outre dans cet exemple à contrôler les émissions vers celle-ci, afin de transmettre des messages alternativement dans un sens et dans l'autre sur la ligne 7 simultanément ou à l'alternat. Afin de réduire à un minimum la durée moyenne entre l'arrivée des télécopies dans la boîte à lettres 3 et leur relevé, l'horaire évolue de façon à retenir une séquence de relèves correspondant aux pics du spectre (23) du nombre de messages arrivés entre relevés successifs, sur la période déterminée d'apprentissage. Comme indiqué, on tient aussi compte ici du spectre 20 des émissions. Les instants d'appel (7) sont ainsi de préférence réglés pour être situés juste après les pics de spectre, afin d'écouler un maximum de télécopies avec un délai d'attente minimal.

Dans la mesure où les télécopies destinées au télécopieur 5 sont horodatées à leur arrivée dans la boîte 3, ou lors de leur émission par le télécopieur 4, le spectre du trafic arrivant en boîte à lettres 3 peut être déterminé avec précision, ou, respectivement, estimé d'après un temps estimé de transmission dans l'INTERNET 1, indépendamment de la séquence des relevés.

Par l'enchaînement des émissions et des relevés, on peut ainsi, pour le prix d'une seule unité de taxe de communication locale (7) correspondant à quelques minutes, transférer plusieurs messages, de télécopie ou tout courrier électronique, dont la durée de chacun est bien inférieure à ces quelques minutes, qui seraient donc, dans la plupart des cas, en grande partie inemployées si la communication ne servait que pour un seul transfert ou même des transferts dans un seul sens.

## Revendications

1. Procédé de relève des courriers électroniques d'une boîte à lettres (3), reliée à un réseau de transmission de données (1), par appels téléphoniques de la boîte (3) à travers un réseau téléphonique (7), caractérisé par le fait que :
- on établit un menu d'options d'appels,
- on accède au menu et
- on applique au menu un algorithme de sélection pour sélectionner une option d'appels.

2. Procédé selon la revendication 1, dans lequel, on adapte l'option sélectionnée au remplissage de la boîte à lettres (3).

3. Procédé selon la revendication 2, dans lequel, pour adapter l'option, on lance cycliquement des appels de relève de la boîte à lettres (3) pour établir un spectre (23) du nombre de messages arrivés entre relevés successifs, sur une période déterminée d'apprentissage, et on retient une séquence d'appels de relève correspondant aux pics du spectre.

4. Procédé selon l'une des revendications 2 et 3, dans lequel on adapte l'option sélectionnée continûment.

5. Procédé selon l'une des revendications 1 à 4, dans lequel on combine, dans un même appel, la relève de la boîte à lettres et l'émission d'un message sur le réseau de transmission de données (1).

6. Procédé selon la revendication 5, dans lequel on émet, sous forme dudit message, un accusé de réception de courrier relevé lors de l'appel.

7. Procédé selon l'une des revendications 1 à 6, dans lequel on s'assure (22A) de ne pas relever plusieurs fois un même courrier.
